# EUROPÄISCHE PATENTANMELDUNG

(11) **EP 2 636 698 A1**
(43) Veröffentlichungstag der Anmeldung: **11.09.2013**
(21) Anmeldenummer: 12158104.5
(22) Anmeldetag: 05.03.2012
(51) Int. Cl.: C08K 3/08, C08J 5/00, C08L 77/00, C08K 7/00

(54) **Thermoplastische Formmassen**

(71) Anmelder: LANXESS Deutschland GmbH, 51369 Leverkusen (DE)
(72) Erfinder: Benighaus, Tobias Dr., 40215 Düsseldorf (DE); Joachimi, Detlev Dr., 47800 Krefeld (DE); Margraf, Günter Dr., 41539 Dormagen (DE); Ruthard, Christian Dr., 41539 Dormagen (DE)

(57) **Zusammenfassung**

Die vorliegende Erfindung betrifft thermoplastische Formmassen mit verbesserter Beständigkeit gegen Polymerkettenabbau enthaltend Partikel aus mindestens zwei Metallen, die in Kontakt miteinander sind, sowie die Verwendung dieser Partikel zur Verbesserung der Beständigkeit thermoplastischer Formmassen gegen Polymerkettenabbau. Des Weiteren betrifft die Erfindung Verfahren zur Herstellung dieser Formmassen sowie ihre Verwendung zur Herstellung von Bauteilen und Artikeln.

## Beschreibung

Die vorliegende Erfindung betrifft thermoplastische Formmassen mit verbesserter Beständigkeit gegen Polymerkettenabbau enthaltend Partikel aus mindestens zwei Metallen, die in Kontakt miteinander sind, sowie die Verwendung dieser Partikel zur Verbesserung der Beständigkeit thermoplastischer Formmassen gegen Polymerkettenabbau. Des Weiteren betrifft die Erfindung Verfahren sowie Stoffgemische zur Herstellung dieser thermoplastischen Formmassen sowie ihre Verwendung zur Herstellung von Bauteilen und Artikeln.

Einer der bestimmenden Faktoren für die Eigenschaften thermoplastischer Formmassen ist das mittlere Molekulargewicht des zugrunde liegenden Polymers. Ein höheres mittleres Molekulargewicht ist gleichbedeutend mit längeren Polymerketten, die unter anderem zu besseren mechanischen Eigenschaften führen. Polymere mit längeren Ketten zeichnen sich durch höhere Festigkeiten, Steifigkeiten und Zähigkeiten aus.

Längere Polymerketten erhöhen jedoch auch die Viskosität eines thermoplastischen Polymers in der Schmelze und erschweren so die Verarbeitung zu Formteilen. Besonders im Spritzgussverfahren ist eine hohe Viskosität der Schmelze problematisch und kann eine vollständige Füllung der Form verhindern.

Die Polymerkettenlänge muss daher so gewählt werden, dass eine Verarbeitung noch möglich ist, aber das resultierende Formteil auch ausreichende mechanische Eigenschaften aufweist. Eine konstante großtechnische Produktion von Formteilen aus thermoplastischen Formmassen mit gleichbleibenden Eigenschaften setzt daher voraus, dass sich die Polymerkettenlänge während des Produktionsprozesses möglichst nicht ändert. Auch während der späteren Nutzung des Formteils ist eine Veränderung der mechanischen Eigenschaften meist nicht erwünscht. Daher sollte die Polymerkettenlänge auch in dieser Phase möglichst unverändert bleiben.

Während der Produktion der thermoplastischen Formmassen sowie während der Weiterverarbeitung zu Formteilen sind thermoplastische Formmassen häufig drastischen Bedingungen ausgesetzt. Hohe thermische und mechanische Belastungen, wie sie z.B. beim Spritzgussprozess auftreten, können zu einem Abbau der Polymerketten führen. Auch während der Nutzung kann das Formteil Bedingungen ausgesetzt sein, die zu einem Abbau der Polymerketten und damit zu einer Verschlechterung der mechanischen Eigenschaften führen.

Stand der Technik bei der Verbesserung der Beständigkeit thermoplastischer Formmassen gegen Polymerkettenabbau ist der Einsatz von Additiven z. B. auf Basis von Phosphiten. Die Phosphite fangen freie Radikale ab und verhindern so den Abbau der Polymerketten durch diese Radikale. US-A 4956407 beschreibt Formmassen basierend auf einem Blend aus Polycarbonat und einem modifizierten Acrylnitril-Butadien-Styrol-Copolymer, welche ein Phosphit-Additiv enthalten, um die Beständigkeit des Acrylnitril-Butadien-Styrol-Copolymers zu erhöhen.

JP5117482A beschreibt eine Formmasse basierend auf einem Ethylen-Vinylalkohol-Copolymer, welcher zur Verbesserung der Stabilität bei der Extrusion ein Phosphit-Additiv zugegeben wird.

JP2004/292562A beschreibt eine Methode zur Herstellung von Formmassen mit verbesserter Beständigkeit gegen thermische Belastungen. Diese Formmassen enthalten neben Polyamid und Polypropylen auch ein Phosphit-Additiv.

Phosphit-Additive weisen jedoch den technischen Nachteil auf, dass sie bei der Verarbeitung der thermoplastischen Formmasse oft eine Verlängerung der Polymerketten und somit eine Zunahme der Viskosität bewirken. In Kombination mit erhöhten Wasser-Konzentrationen in der Schmelze zeigen Phosphit-Additive jedoch oft auch den gegenteiligen Effekt und beschleunigen den Abbau der Polymerketten.

Der vorliegenden Erfindung lag daher die Aufgabe zugrunde, thermoplastische Formmassen mit verbesserter Beständigkeit gegen Polymerkettenabbau zur Verfügung zu stellen, welche nicht den oben genannten Nachteil des Standes der Technik aufweisen.

Überraschend wurde gefunden, dass thermoplastische Formmassen mit Partikeln enthaltend mindestens zwei elementare Metalle, die in Kontakt miteinander sind, eine verbesserte Beständigkeit gegen Polymerkettenabbau aufweisen, die deutlich über den Stand der Technik hinausgeht. Des Weiteren bewirken die erfindungsgemäß einzusetzenden Partikel keine oder nur eine geringfügige Verlängerung der Polymerketten bei der Verarbeitung der thermoplastischen Formmassen worin diese Partikel eingearbeitet wurden.

Die Lösung der Aufgabe und somit Gegenstand der vorliegenden Erfindung ist die Verwendung von Partikeln enthaltend mindestens zwei elementaren Metallen, die in Kontakt miteinander sind, zur Verbesserung der Beständigkeit thermoplastischer Formmassen gegen Polymerkettenabbau wobei die Metalle in den Partikeln als separate Phasen vorliegen und keine Legierung bilden und in jeder Phase mindestens ein Metall zu mehr als 50 Gew.-% vorliegt.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Die Erfindung betrifft aber auch thermoplastische Formmassen enthaltend
(1) 10 bis 99,94 Gew.-% wenigstens eines thermoplastischen Polymers,
(2) 0,05 bis 20 Gew.-% Partikel enthaltend mindestens zwei Metalle, die in Kontakt miteinander sind, und
(3) 0,01 bis 70 Gew.-% wenigstens eines weiteren Zusatzstoffes mit der Maßgabe, dass die Summe aller Gewichtsprozente stets 100 ergibt und die Metalle in der Komponente (2) als separate Phasen vorliegen und keine Legierung bilden und in jeder Phase mindestens ein Metall zu mehr als 50 Gew.-% vorliegt.

Die vorliegende Erfindung betrifft aber auch die Verwendung von Partikeln (2) enthaltend mindestens zwei Metalle, die in Kontakt miteinander sind, zur Verbesserung der Beständigkeit thermoplastischer Formmassen gegen Polymerkettenabbau, wobei die Formmassen
(1) 10 bis 99,94 Gew.-% wenigstens eines thermoplastischen Polymers und
(3) 0,01 bis 70 Gew.-% wenigstens eines weiteren Zusatzstoffes enthalten und die Partikel (2) zu 0,05 bis 20 Gew.-% eingesetzt werden, mit der Maßgabe, dass die Summe aller Gewichtsprozente stets 100 ergibt.

In einer bevorzugten Ausführungsform können die erfindungsgemäßen thermoplastischen Formmassen zusätzlich zu den Komponenten (1), (2) und (3) noch
(4) 5 bis 70 Gew.-% Füll- oder Verstärkungsstoffe, bevorzugt Glas- oder Carbonfasern, besonders bevorzugt Glasfasern enthalten, wobei die Anteile der Komponenten (1), (2) und (3) so reduziert werden, dass sich die Anteile aller Komponenten zu 100 Gew.-% aufsummieren.

In einer weiteren bevorzugten Ausführungsform können die erfindungsgemäßen thermoplastischen Formmassen zusätzlich zu den Komponenten (1), (2), (3) und (4) oder an Stelle der Komponente (4) noch
(5) 0,25 bis 10 Gew.-% eines oder mehrerer Polyole mit mehr als zwei Hydroxyl-Gruppen enthalten, wobei die Anteile der Komponenten (1), (2), (3) und gegebenenfalls (4) so reduziert werden, dass sich die Anteile aller Komponenten zu 100 Gew.-% aufsummieren.

Erfindungsgemäß bevorzugt sind thermoplastische Formmassen enthaltend
(1) 20 bis 99,94 Gew.-% wenigstens eines thermoplastischen Polymers,
(2) 0,05 bis 10 Gew.-%, bevorzugt 0,1 bis 5 Gew.-%, besonders bevorzugt 0,2 bis 2,5 Gew.-% Partikel enthaltend mindestens zwei Metalle, die in Kontakt miteinander sind, und
(3) 0,01 bis 70 Gew.-% wenigstens eines weiteren Zusatzstoffes mit der Maßgabe, dass die Summe aller Gewichtsprozente stets 100 ergibt und die Metalle in der Komponente (2) als separate Phasen vorliegen und keine Legierung bilden und in jeder Phase mindestens ein Metall zu mehr als 50 Gew.-% vorliegt.

In einer weiteren bevorzugten Ausführungsform können die thermoplastischen Formmassen zusätzlich zu den Komponenten (1), (2) und (3) noch
(4) 10 bis 70 Gew.-% Füll- oder Verstärkungsstoffe, bevorzugt Glas- oder Carbonfasern, besonders bevorzugt Glasfasern enthalten wobei die Anteile der Komponenten (1), (2) und (3) so reduziert werden, dass sich die Anteile aller Komponenten zu 100 Gew.-% aufsummieren.

In einer weiteren bevorzugten Ausführungsform können die erfindungsgemäßen thermoplastischen Formmassen zusätzlich zu den Komponenten (1), (2), (3) und (4) oder an Stelle der Komponente (4) noch
(5) 0,5 bis 10 Gew.-%, bevorzugt 1 bis 10 Gew.-%, besonders bevorzugt 2 bis 6 Gew.-% eines oder mehrerer Polyole mit mehr als zwei Hydroxyl-Gruppen enthalten wobei die Anteile der Komponenten (1), (2), (3) oder (1). (2), (3) und (4) so reduziert werden, dass sich die Anteile aller Komponenten zu 100 Gew.-% aufsummieren.

Die Summe aller Gewichtsprozente in den erfindungsgemäßen thermoplastischen Formmassen ist immer 100.

Ferner ist Gegenstand der vorliegenden Erfindung ein Verfahren zur Herstellung der erfindungsgemäßen thermoplastischen Formmassen dadurch gekennzeichnet, dass man die Komponenten (1), (2), und (3) sowie gegebenenfalls noch (4) und/oder (5) in entsprechenden Gewichtsanteilen mischt, bevorzugt bei 220 bis 360 °C, besonders bevorzugt durch Vermengen, Vermischen, Kneten, Compoundieren, Extrudieren oder Verwalzen.

Des Weiteren ist die Verwendung der erfindungsgemäßen thermoplastischen Formmassen zur Herstellung von Bauteilen oder Artikeln mit erhöhter Stabilität gegenüber einem Abbau der Polymerketten, bevorzugt in der Elektro-, Elektronik-, Telekommunikations-, Solar-, Informationstechnologie-, Computerindustrie, im Haushalt, Sport, in der Medizin oder der Unterhaltungsindustrie, besonders bevorzugt in Kraftfahrzeugen, ganz besonders bevorzugt für den Motorraum von Kraftfahrzeugen, Gegenstand der vorliegenden Erfindung.

Die als Komponente (1) einzusetzenden thermoplastischen Polymere sind bevorzugt amorphe Polymere, thermoplastische Elastomere oder semi-kristalline Polymere. Besonders bevorzugt werden semi-kristalline Thermoplasten mit einem Schmelzpunkt von mindestens 180 °C oder amorphe Thermoplasten mit einer Glasübergangstemperatur von mindestens 150 °C eingesetzt.

Insbesondere bevorzugte als Komponente (1) einzusetzende amorphe Polymere für erfindungsgemäße Zusammensetzungen sind amorphe Polyamide, Polyimide, Polyetherimide, Polysulfone oder Polyarylate.

Insbesondere besonders bevorzugte als Komponente (1) einzusetzende semi-kristalline Polymere für erfindungsgemäße Zusammensetzungen sind Polyphenylensulfide, Polyester, Polyetherketone und semi-kristalline Polyamide.

In einer bevorzugten Ausführungsform ist der Thermoplast der Komponente (1) auch ein Blend unterschiedlicher thermoplastischer Polymere.

Insbesondere ganz besonders bevorzugt wird als thermoplastisches Polymer aliphatisches oder semiaromatisches Polyamid, insbesondere Polyamid 6 oder Polyamid 66 mit relativen Lösungsviskositäten in m-Kresol von 2,0 bis 4,0, insbesondere ganz besonders bevorzugt Polyamid 6 mit einer relativen Lösungsviskosität in m-Kresol von 2,3-3,2 eingesetzt

Bei Verfahren zur Bestimmung der relativen Lösungsviskosität werden die Durchlaufzeiten eines gelösten Polymers durch ein Ubbelohde-Viskosimeter gemessen, um anschließend den Viskositätsunterschied zwischen Polymerlösung und seinem Lösungsmittel, hier m-Kresol (1 %ige Lösung), zu bestimmen. Anwendbare Normen sind DIN 51562; DIN ISO 1628 oder entsprechende Normen.

In einer bevorzugten Ausführungsform werden auch Blends aus Polyamid 6, Polyamid 66, Polyamid 46, Polyamid 12 oder Copolyamiden als Komponente (1) eingesetzt. In einer weiteren Ausführungsform enthalten die erfindungsgemäßen thermoplastischen Formmassen auch Blends aus den beschriebenen Polyamiden und weiteren thermoplastischen Polymeren, bevorzugt Blends aus Polyamid mit wenigstens einem Polymer der Reihe Polyphenylenoxid, Polyethylen oder Polypropylen.

Die in den erfindungsgemäß einzusetzenden thermoplastischen Formmassen enthaltenen Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden verlaufen meist über die Polykondensation in der Schmelze. Im Rahmen der vorliegenden Erfindung wird auch die hydrolytische Polymerisation von Lactamen als Polykondensation verstanden.

Erfindungsgemäß bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können. Bevorzugt werden als Edukte aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 2-Methylpentan-1,5-diamin, 1,9-Nonandiamin, 2,2,4- und 2,4,4-Trimethylhexamethylendiamin, die Isomeren Diamino-dicyclohexylmethan, Diaminodicyclohexylpropan, Bis-aminomethyl-cyclohexan, Phenylendiamin, Xylylendiamin, Aminocarbonsäuren, insbesondere Aminocapronsäure, oder die entsprechenden Lactame eingesetzt. Copolyamide aus mehreren der genannten Monomeren sind eingeschlossen.

Besonders bevorzugt werden Caprolactame, ganz besonders bevorzugt wird ε-Caprolactam eingesetzt.

Die als Komponente (2) erfindungsgemäß einzusetzenden Partikel enthalten mindestens zwei elementare Metalle, die in Kontakt miteinander sind. Die Metalle liegen in der Komponente (2) als separate Phasen vor und bilden keine Legierung, wobei in jeder Phase mindestens ein Metall zu mehr als 50 Gew.-% vorliegt. Jedes einzelne Metall kann auch mehrere räumlich voneinander getrennte separate Phasen bilden.

Bevorzugt gehören alle Metalle, die in der Komponente (2) enthalten sind, zu den Gruppen 8 bis 13 des Periodensystems. Besonders bevorzugt werden solche Metalle eingesetzt, die zur Gruppe Eisen, Cobalt, Nickel, Kupfer, Zink und Aluminium gehören. Ganz besonders bevorzugt enthalten die Partikel der Komponente (2) Eisen und mindestens ein weiteres Metall, das unedeler ist als Eisen. Erfindungsgemäß werden solche Metalle als unedler als Eisen betrachtet, deren Normalpotential in elementarer Form bei 25 °C relativ zur Standardwasserstoff-Elektrode niedriger als -0,44 V ist. Insbesondere besonders bevorzugt enthalten die Partikel der Komponente (2) Eisen und mindestens ein Metall der Gruppe Zink und Aluminium, bevorzugt Zink.

Die Metalle der erfindungsgemäß einzusetzenden Komponente (2) können direkt über mindestens eine gemeinsame Grenzfläche oder indirekt durch elektrisch leitendes Material in Kontakt miteinander stehen.

Bevorzugte Formen der erfindungsgemäß einzusetzenden Komponente (2) mit einem direkten Kontakt zwischen den Metallen sind entweder Partikel, die aus einem Kern enthaltend mindestens ein Metall bestehen, der zumindest teilweise mit mindestens einem weiteren Metall beschichtet ist, oder Partikel, die aus mehreren Schichten bestehen, wobei mindestens zwei der Schichten jeweils mindestens ein Metall enthalten. In einer besonders bevorzugten Ausführungsform bestehen die Partikel der Komponente (2) aus einem Kern, der mindestens ein Metall enthält, das unedler ist als Eisen, und einer äußeren Schicht, die Eisen enthält. In einer ganz besonders bevorzugten Ausführungsform bestehen die Partikel der Komponente (2)aus einem Kern aus Zink und/oder Aluminium, bevorzugt Zink, und einer äußeren Schicht, die Eisen enthält und bevorzugt zu mindestens 50 Gew.-% aus Eisen besteht. Bevorzugt liegt das Verhältnis der Mengenanteile von Eisen und Zink an den Partikeln der Komponente (2) zwischen 100:1 und 1:1000, besonders bevorzugt zwischen 50:1 und 1:500, ganz besonders bevorzugt zwischen 40:1 und 1:200.

In einer weiteren bevorzugten Ausführungsform enthalten die Partikel der erfindungsgemäß einzusetzenden Komponente (2) mindestens zwei Metalle, die in Kontakt miteinander sind, sowie ein nicht-metallisches Trägermaterial. Bevorzugt werden als nicht-metallische Trägermaterialien Oxide, Sulfide, Nitride, Sulfate, Halogenide oder Phosphate der Elemente der Gruppen 3 bis 13 des Periodensystems, Halogenide, Carbonate und Sulfate der Alkali- und Erdalkalimetalle, amorphe und kristalline Silikate sowie die Allotrope des Kohlenstoffs eingesetzt. Besonders bevorzugt werden die Oxide der Elemente der Gruppen 3 bis 13 des Periodensystems, die Halogenide und Carbonate der Alkali- und Erdalkalimetalle, Bariumsulfat, Calciumsulfat, Ruß, Graphit, Bornitrid, Kristobalit, Zeolit, A-Glas, E-Glas, kristallines und amorphes Siliziumdioxid, Kaolin, Muskovit, Phlogopit, Talkum, Wollastonit eingesetzt.

Bevorzugt wird die erfindungsgemäß einzusetzende Komponente (2) als Pulver, Paste oder Kompaktat eingesetzt. Bevorzugte Pulver der Komponente (2) weisen eine mittlere Partikelgröße d₅₀ von maximal 500 µm, bevorzugt 0,1 bis 250 µm, besonders bevorzugt 0,5 bis 150 µm, ganz besonders bevorzugt 0,5 bis 70 µm auf (gemäß ASTM D 1921-89, Methode A), wodurch die feine Verteilung im Thermoplasten gewährleistet wird. Wird die Komponente (2) als Paste oder Kompaktat eingesetzt, so können die üblicherweise für die Herstellung von Pasten oder Kompaktaten eingesetzten Bindemittel, bevorzugt Wachse, Öle, Polyglykole oder ähnliche Verbindungen gegebenenfalls auch in Kombinationen in geeigneten Mengenanteilen eingesetzt werden.

Die Partikel der erfindungsgemäß einzusetzenden Komponente (2) können in unterschiedlichen Formen vorliegen, die durch das Aspektverhältnis beschrieben werden kann. Bevorzugt werden Partikel mit einem Aspektverhältnis von 1 bis 100, besonders bevorzugt 1 bis 10, ganz besonders bevorzugt 1 bis 3 eingesetzt. Als Apektverhältnis (Struktur) bezeichnet man das Verhältnis der Höhe oder Tiefe einer Struktur zu ihrer (kleinsten) Breite. Das Aspektverhältnis spielt bei Thermoplasten eine wesentliche Rolle. Um Thermoplaste zu verstärken und zu füllen, werden Zusatzstoffe unterschiedlicher Form benutzt. Welche mechanischen Eigenschaften der Verbund hat, wird durch den Formfaktor definiert. Er ergibt sich aus dem Verhältnis der Länge zur Dicke. Kubische oder kugelförmige Teilchen besitzen den Formfaktor 1, Fasern oder andere plättchenförmige anisotrope Füllstoffe dagegen weisen meist Faktoren mit einem Wert über 100 auf. Je höher das Aspektverhältnis ist, desto steifer sind die Ketten in der Regel. Das liegt daran, dass die Polymermatrix eine mechanisch angelegte Spannung aufnimmt und auf den Verstärkungsstoff überträgt. Ist das Aspektverhältnis hoch, kann die durch die Spannung entstandene Energie besonders gut im Stoff abgeführt werden. Werden die Zusatzstoffe außerdem mit Kupplungsreagenzien beschichtet, verbessert das die Verträglichkeit mit der Matrix zusätzlich. Somit steigern sich die mechanischen Eigenschaften noch einmal, die Verarbeitung wird deutlich einfacher.

Die Partikel der erfindungsgemäß einzusetzenden Komponente (2) können mit oder ohne Oberflächenmodifizierung eingesetzt werden. Als Oberflächenmodifizierung werden organische Kopplungsmittel bezeichnet, welche die Anbindung an die thermoplastische Matrix verbessern sollen. Als Oberflächenmodifizierung werden bevorzugt Aminosilane oder Epoxysilane eingesetzt. In einer bevorzugten Ausführungsform werden die Partikel der erfindungsgemäßen Komponente (2) jedoch ohne Oberflächenmodifizierung eingesetzt.

In einer bevorzugten Ausführungsform wird die Oberfläche der erfindungsgemäß einzusetzenden Partikel (2) über eine Oberflächenbehandlung verändert. Erfindungsgemäß bevorzugte Verfahren zur Oberflächenbehandlung der Partikel (2) sind die Säurebehandlung, Basenbehandlung, Sodabehandlung, Aminbehandlung und Anodenbehandlung.

Die erfindungsgemäß bevorzugten oben genannten Vorbehandlungsmethoden sind beispielsweise in EP 1 958 763 A1 oder in EP 1 559 541 A1 ausführlich beschrieben, deren Inhalte von der vorliegenden Erfindung vollumfänglich mit umfasst sind. Demnach werden für Säurebehandlungen bevorzugt anorganische Säuren eingesetzt, besonders bevorzugt wässrige Lösungen dieser anorganischen Säuren, insbesondere Salzsäure, Schwefelsäure, Salpetersäure oder eine wässrige Lösung von Ammoniumhydrogenfluorid.

Für die Sodabehandlung wird bevorzugt kaustisches Soda eingesetzt. Als kaustisches Soda wird Ätznatron bezeichnet, auch bekannt als NaOH.

Für die Aminbehandlung wird bevorzugt Ammoniak, Hydrazin oder die wässrige Lösung eines organischen Amins eingesetzt. Bevorzugte Amine im Sinne der vorliegenden Erfindung sind Amine der Reihe Methylamin, Dimethylamin, Trimethylamin, Ethylamin, Diethylamin, Triethylamin, Ethylendiamin, Ethanolamin, Allylamin, Diethanolamin, Triethanolamin, Anilin oder ähnliche.

Für die Alkalibehandlung werden bevorzugt wässrige Lösungen von Alkalimetallhydroxiden oder Erdalkalimetallhydroxiden oder Alkalicarbonate eingesetzt. Besonders bevorzugt einzusetzende Alkalicarbonate sind Natriumcarbonat oder Kaliumcarbonat. Besonders bevorzugte Alkalimetallhydroxide sind Natriumhydroxid oder Kaliumhydroxid. Besonders bevorzugte Erdalkalimetallhydroxide sind Hydroxide der Reihe Calciumhydroxid, Strontiumhydroxid, Bariumhydroxid oder Radiumhydroxid.

Die Oberflächenbehandlung kann während der Herstellung der erfindungsgemäß einzusetzenden Partikel der Komponente (2)oder im Anschluss an deren Herstellung durchgeführt werden. In einer bevorzugten Ausführungsform werden die Metallkerne der Komponente (2) mindestens einer der vorgenannten Oberflächenbehandlungen unterzogen und anschließend mit mindestens einem weiteren Metall zumindest teilweise beschichtet. In einer besonders bevorzugten Ausführungsform werden die als Kern der Komponente (2) einzusetzenden Metalle, welche unedeler als Eisen sind, mindestens einer der vorgenannten Oberflächenbehandlungen unterzogen und anschließend zumindest teilweise mit Eisen beschichtet.

Weitere Zusatzstoffe als Komponenten (3) im Sinne der vorliegenden Erfindung sind bevorzugt Thermostabilisatoren, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe oder Pigmente. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden. Die als Komponente (3) einzusetzenden Zusatzstoffe können alleine oder in Mischung bzw. in Form von Masterbatchen eingesetzt werden.

Erfindungsgemäß als Zusatzstoff einzusetzende Thermostabilisatoren sind bevorzugt Kupferverbindungen, insbesondere Kupferhalogenide in Kombination mit Alkalimetallhalogeniden, Alkalimetall- und Erdalkalimetallhalogenide, insbesondere Natriumchlorid oder Calciumchlorid, Manganchlorid, sterisch gehinderte Phenole und/oder Phosphite, Phosphate, z.B. Dinatriumdihydrogendiphosphat, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen.

Erfindungsgemäß als Zusatzstoff einzusetzende Thermostabilisatoren sind bevorzugt Kupferverbindungen, Alkalimetall- und Erdalkalimetallhalogenide, Manganchlorid, sterisch gehinderte Phenole und/oder Phosphite, Phosphate, Hydrochinone, aromatische sekundäre Amine, substituierte Resorcine, Salicylate, Benzotriazole oder Benzophenone, sowie verschieden substituierte Vertreter dieser Gruppen und/oder deren Mischungen.

Erfindungsgemäß bevorzugte Kupferverbindungen sind Kupferhalogenide, besonders bevorzugt in Kombination mit Alkalimetallhalogeniden.

Erfindungsgemäß bevorzugte Alkalimetall- und Erdalkalimetallhalogenide sind Natriumchlorid oder Calciumchlorid.

Erfindungsgemäß bevorzugtes Phosphat ist Dinatriumdihydrogendiphosphat.

Erfindungsgemäß als Zusatzstoff einzusetzende UV-Stabilisatoren sind bevorzugt substituierte Resorcine, Salicylate, Benzotriazole oder Benzophenone.

Im Falle erfindungsgemäß einzusetzender Schlagzähmodifikatoren oder Elastomer-Modifikatoren handelt es sich ganz allgemein um Copolymerisate, die bevorzugt aus mindestens zwei der folgenden Reihe an Monomeren aufgebaut sind: Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente. Die Copolymerisate können kompatibilisierende Gruppen, bevorzugt Maleinsäureanhydrid oder Epoxid enthalten.

Erfindungsgemäß als Zusatzstoff einzusetzende Farbstoffe oder Pigmente sind bevorzugt anorganische Pigmente, organische Pigmente oder Farbstoffe sowie andere Farbmittel.

Erfindungsgemäß bevorzugte Pigmente sind anorganische Pigmente. Erfindungsgemäß besonders bevorzugte Pigmente sind Titandioxid, Ultramarinblau, Eisenoxid, Zinksulfid oder Russ.

Erfindungsgemäß bevorzugt einzusetzende organische Pigmente sind Phthalocyanine, Chinacridone, Perylene.

Erfindungsgemäß bevorzugt einzusetzende Farbstoffe sind Nigrosin oder Anthrachinone. Erfindungsgemäß als Zusatzstoff einzusetzende Nukleierungsmittel sind bevorzugt Natrium- oder Calciumphenylphosphinat, Aluminiumoxid oder Siliziumdioxid oder Talkum, besonders bevorzugt Talkum.

Erfindungsgemäß als Zusatzstoff einzusetzende Gleit- und/oder Entformungsmittel sind bevorzugt langkettige Fettsäuren oder deren Salze sowie deren Esterderivate oder Amidderivate, Ester von Montansäuren mit Ethylenglycol sowie niedermolekulare Polyethylen- bzw. Polypropylenwachse in oxidierter und nicht-oxidierter Form.

Erfindungsgemäß besonders bevorzugte Gleit- und/oder Entformungsmittel sind in der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen enthalten.

Eine erfindungsgemäß bevorzugte langkettige Fettsäure ist Stearinsäure. Erfindungsgemäß bevorzugte Salze der Fettsäuren sind Salze der Stearinsäure, insbesondere Ca- oder Zn-Stearat.

Erfindungsgemäß bevorzugte Esterderivate oder Amidderivate sind Ethylen-bis-stearylamid, Glyzerin-tristearat, Stearylstearat oder Montanwachse.

Erfindungsgemäß als Komponente (4) einzusetzende Füll- und Verstärkungsstoffe sind faserförmig, nadelförmig oder teilchenförmig. Bevorzugt sind Kohlenstofffasern oder Carbonfasern, Glaskugeln, amorphe Kieselsäure, Calciumsilicat, Calcium-Metasilicat, Magnesiumcarbonat, Kaolin, calciniertes Kaolin, Kreide, gepulverter Quarz, Glimmer, Bariumsulfat, Feldspat, Wollastonit, Montmorillonit oder Glasfasern. Besonders bevorzugt sind Glas- oder Carbonfasern. Ganz besonders bevorzugt sind Glasfasern, insbesondere aus E-Glas. Die faserförmigen oder teilchenförmigen Verstärkungsstoffe sind in einer bevorzugten Ausführungsform zur besseren Verträglichkeit mit dem Thermoplasten mit einer geeigneten Oberflächenmodifizierung, insbesondere enthaltend Silanverbindungen versehen.

Die als Komponenten (5) erfindungsgemäß einzusetzenden Polyole sind auch bekannt unter den Bezeichnungen "Polyalkohol" oder "mehrwertiger Alkohol". Bei den erfindungsgemäß einzusetzenden Polyolen handelt sich um organische Moleküle mit mehr als zwei Hydroxylgruppen pro Molekül, wobei der Molekülaufbau sowohl linear als auch zyklisch sein kann oder auch eine Kombination der beiden Merkmale beinhaltet. Das Polyol hat bevorzugt einen aliphatischen oder aromatischen Aufbau bzw. eine Kombination der beiden Merkmale.

In einer bevorzugten Ausführungsform enthalten aliphatische Ketten innerhalb eines erfindungsgemäß einzusetzenden Polyols neben Kohlenstoffatomen auch Heteroatome. Bevorzugte Heteroatome sind Stickstoff, Sauerstoff oder Schwefel.

Ein Ringsystem in einem Polyol kann monozyklisch, bizyklisch oder auch polyzyklisch sein. Die erfindungsgemäß einzusetzenden Polyole haben in einer bevorzugten Ausführungsform neben den Hydroxylgruppen außerdem weitere funktionelle Gruppen, bevorzugt Ethergruppen, Carbonsäuregruppen, Amidgruppen oder Estergruppen.

Besonders bevorzugt einzusetzende Polyole mit mehr als zwei Hydroxylgruppen sind solche Polyole mit drei Hydroxylgruppen der Reihe Glyzerin, Trimethylolpropan, 2,3-Di-(2'- hydroxyethyl)-cyclohexan-1-ol, Hexan-1,2,6-triol, 1,1,1-Tris-(hydroxymethyl)ethan, 3-(2'-Hydroxyethoxy)-propan-1,2-diol, 3-(2'-Hydroxypropoxy)-propan-1,2-diol, 2-(2'-Hydroxyethoxy)-hexan-1,2-diol, 6-(2'-Hydroxypropoxy)-hexan-1,2-diol, 1,1,1- Tris-[(2'-hydroxyethoxy)-methyl]-ethan, 1,1,1-Tris-2'-hydroxypropoxy-methyl-propan, 1,1,1-Tris-(4'-hydroxyphenyl)-ethan, 1,1,1-Tris-(hydroxyphenyl)-propan, 1,1,3-Tris-(dihydroxy-3-methylphenyl)-propan, 1,1,4-Tris-(dihydroxyphenyl)-butan, 1,1,5-Tris-(hydroxyphenyl)-3-methylpentan, Di-trimethylolpropan, Ethoxylate und Propoxylate des Trimethylolpropans.

Besonders bevorzugt einzusetzende Polyole mit mehr als drei Hydroxylgruppen sind Polyole der Reihe D-Mannit, D-Sorbit, Dulcit, Arabit, Inosit, Xylit, Talitol, Allitol, Altritol, Adonit, Erythrit, Threit, Pentaerythrit, Dipentaerythrit und Tripentaerythrit, sowie Polyole aus der Gruppe der Monosaccharide, insbesondere Mannose, Glucose, Galactose, Fructose, D-Xylose, Arabinose, D-Idose, D-Erythrose, D-Threose, D-Ribose, D-Lyxose, D-Allose, D-Altrose, D-Gulose, D-Talose, D-Ribulose, D-Erythrulose, D-Xylulose, D-Psicose, D-Sorbose, D-Tagatose, D-Gluconsäure, D-Zuckersäure, D-Mannozuckersäure, Schleimsäure, D-Glucuronsäure, D-Mannonsäure, Ascorbinsäure, D-Glucosamin, D-Galactosamin.

Ferner besonders bevorzugt einzusetzende Polyole sind solche aus den Reihen der Oligomere bzw. polymeren Saccharide, insbesondere Cyclodextrine, Saccharose, Milchzucker, Lactose, Sucrose, Trehalose, Raffinose Maltose, Stärke (Amylose, Amylopektin), Pektine, Chitin, Glykogen, Inulin, Hemicellulose oder Cellulose.

Weitere erfindungsgemäß einzusetzende Polyole mit mehr als drei Hydroxylgruppen sind oligomere oder polymere Polyole, die nicht aus der Gruppe der Saccharide sind. Erfindungsgemäß werden hierunter alle oligomeren oder polymerem Polyole mit beliebigem Molekulargewicht umfasst, die entweder in einer ihrer Monomereinheiten eine oder mehrere Hydroxylgruppe tragen, die nach erfolgter Polymerisation erhalten bleibt, oder auch solche Oligomere oder Polymere, die in einem Schritt nach der Polymerisation mit Hydroxylgruppen funktionalisiert worden sind (polymeranaloge Reaktion, z.B. durch Verseifung von Estern). Insbesondere bevorzugt werden hieraus PolyesterPolyole, Polyether-Polyole, Phenol-Formaldehyd-Harze (Novolake), Polyvinylalkohol oder Ethylen-Vinylalkohol-Copolymere (EVOH) eingesetzt.

Insbesondere besonders bevorzugt als Komponente (5) einzusetzende Polyole sind solche mit mehr als drei Hydroxylgruppen. Ganz besonders bevorzugt wird wenigstens ein Polyol der Reihe Pentaerythrit, Dipentaerythrit, Tripentaerythrit, Di-trimethylolpropan und Ethylen-Vinylalkohol-Copolymere eingesetzt, insbesondere besonders bevorzugt sind Dipentaerythrit oder Tripentaerythrit, insbesondere ganz besonders bevorzugt ist Tripentaerythrit.

Die vorliegende Erfindung betrifft aber auch Stoffgemische aus wenigstens einem Polyol und Partikeln enthaltend mindestens zwei elementare Metalle, die in Kontakt miteinander sind wobei die Metalle in den Partikeln als separate Phasen vorliegen und keine Legierung bilden und in jeder Phase mindestens ein Metall zu mehr als 50 Gew.-% vorliegt, also Stoffgemische der oben bezeichneten Komponenten (2) und (5).

Die vorliegende Erfindung betrifft bevorzugt Stoffgemische aus wenigstens einem Polyol und Partikeln enthaltend mindestens zwei elementare Metalle, die in Kontakt miteinander sind, wobei die Partikel aus einem Kern der unedler ist als Eisen und einer äußeren Schicht die Eisen enthält bestehen und die Metalle in den Partikeln als separate Phasen vorliegen und keine Legierung bilden und in jeder Phase mindestens ein Metall zu mehr als 50 Gew.-% vorliegt.

Die vorliegende Erfindung betrifft besonders bevorzugt Stoffgemische aus wenigstens einem Polyol und Partikeln enthaltend mindestens zwei elementare Metalle, die in Kontakt miteinander sind, wobei die Partikel aus einem Zink-Kern und einer äußeren Schicht die Eisen enthält, bestehen und die Metalle in den Partikeln als separate Phasen vorliegen und keine Legierung bilden und in jeder Phase mindestens ein Metall zu mehr als 50 Gew.-% vorliegt.

In einer besonders bevorzugten Ausführungsform besteht der Partikel der Komponente (2) im Kern zu 100 Gew.-% aus Zink und in der äußeren Schicht zu 100 Gew.-% aus Eisen.

Bevorzugt sind Stoffgemische, worin wenigstens ein Polyol mit mehr als zwei Hydroxylgruppen eingesetzt wird.

Besonders bevorzugt sind Stoffgemische, worin wenigstens ein Polyol der Reihe Pentaerythrit, Dipentaerythrit, Tripentaerythrit, Di-trimethylolpropan oder Ethlyen-Vinylalkohol-Copolymere eingesetzt wird.

Ganz besonders bevorzugt sind Stoffgemische, worin wenigstens ein Polyol der Reihe Dipentaerythrit oder Tripentaerythrit eingesetzt wird.

Insbesondere bevorzugt sind Stoffgemische, worin als Polyol Tripentaerythrit eingesetzt wird.

Die vorliegende Erfindung betrifft aber auch die Verwendung der erfindungsgemäßen Stoffgemische aus wenigstens einem Polyol und Partikeln enthaltend mindestens zwei elementare Metalle, die in Kontakt miteinander sind, zur Herstellung von Bauteilen und Artikeln mit erhöhter Stabilität gegenüber einem Abbau der Polymerketten, bevorzugt in der Elektro-, Elektronik-, Telekommunikations-, Solar-, Informationstechnologie-, Computerindustrie, im Haushalt, Sport, in der Medizin oder der Unterhaltungsindustrie, besonders bevorzugt in Kraftfahrzeugen, ganz besonders bevorzugt für den Motorraum von Kraftfahrzeugen.

### Beispiele

Zum Nachweis der erfindungsgemäß beschriebenen Verbesserungen wurde zunächst Zinkpulver äußerlich mit Eisen beschichtet. Anschließend wurden thermoplastische Formmassen, die dieses beschichtete Zinkpulver enthielten, hergestellt.

### Beschichtung des Zinkpulvers

100 g Zinkpulver wurden in 1500 ml destilliertes Wasser gegeben und gut gerührt. Zu dieser Suspension wurden 423 g Eisen(II)-Sulfat-Heptahydrat gelöst in 1500 ml destilliertem Wasser gegeben. Diese Suspension wurde 2 h bei Raumtemperatur gerührt, abfiltriert und mit destilliertem Wasser gewaschen. Der Rückstand wurde unter Stickstoffatmosphäre bei 80 °C für 2 Tage getrocknet und mittels Atomabsorptionsspektroskopie untersucht. Auf dem Zinkpulver wurden 21 Gew.-% Eisen abgeschieden.

### Herstellung und Untersuchung der thermoplastischen Formmassen

Die einzelnen Komponenten wurden in einem Zweiwellenextruder des Typs ZSK 26 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde zwei Tage bei 70°C im Vakuumtrockenschrank getrocknet.

Die Veränderung der Polymerkettenlänge nach der Herstellung der thermoplastischen Formmassen wurde über die relative Lösungsviskosität untersucht. Diese wurde als Verhältnis der Durchlaufzeiten der gelösten Polymere (1 %ige Lösung in m-Kresol) zu dem Lösungsmittel, hier m-Kresol bestimmt.

Des Weiteren wurde die Stabilität der Formmasse gegenüber der Veränderung der Polymerkettenlänge bei kurzzeitiger thermischer Belastung untersucht. Dazu wurde die Volumen-Fließrate der Schmelze (MVR) nach Vorheizzeiten von 5 und 10 Minuten bei einer Temperatur von 280 °C und mit einem Belastungsgewicht von 5 kg gemessen.

Die in der folgenden Tabelle dargestellten Zusammensetzungen wurden nach der oben beschriebenen Weise verarbeitet.

**Tabelle 1: Zusammensetzungen der Formmassen, relative Lösungsviskositäten und Volumen-Fließraten (alle Angaben in Gew.-%).**

| | **Vergleichsbeispiel** | **Beispiel 1** |
|---|---|---|
| Polyamid 6 | 69,24 | 69,24 |
| Glasfaser | 30,00 | 30,00 |
| Montanesterwachs | 0,16 | 0,16 |
| Mikrotalkum | 0,02 | 0,02 |
| Phosphit-Additiv | 0,3 | |
| Zinkpulver mit Eisen beschichtet | | 0,25 |
| | | |
| rel. Lösungsviskosität | 3,03 | 2,91 |
| MVR 5 min (280 °C, 5kg) [cm³/10 min] | 45 | 48 |
| MVR 10 min (280 °C, 5kg) [cm³/10 min] | 42 | 48 |

Die relative Lösungsviskosität des Polyamid 6 lag vor dem Mischen der Inhaltsstoffe in der Schmelze bei 280 °C bei einem Wert von 2,9. Die Herstellung der erfindungsgemäßen Formmasse führt zu keiner signifikanten Erhöhung der relativen Lösungsviskosität. Die Länge der Polymerketten bleibt annähernd unverändert. Bei der Herstellung des Vergleichbeispiels 2 führt das Phosphit-Additiv zu einer Verlängerung der Polymerketten, die zu einer Erhöhung der relativen Lösungsviskosität auf einen Wert von 3,03 führt.

Im Vergleichsbeispiel 1 sinkt die Volumen-Fließrate bei der Verlängerung der Vorheizzeit von 5 auf 10 Minuten von 45 cm³/10 min auf 42 cm³/10 min. Dies bedeutet, dass es während der Vorheizzeit zu einer Verlängerung der Polymerketten kommt wodurch die Viskosität der Schmelze steigt. Im erfindungsgemäßen Beispiel 1 liegt die Volumen-Fließrate nach einer Vorheizzeit von 5 Minuten bei 48 cm³/10 min und bleibt auch nach einer Vorheizzeit von 10 min konstant. Die Viskosität ist also niedriger als im Vergleichsbeispiel und bleibt im Gegensatz zum Vergleichsbeispiel auch nach einer längeren thermischen Belastung konstant.

### Verwendete Materialien:

Polyamid 6, linear mit einer relativen Lösungsviskosität einer 1%igen Lösung in m-Kresol von 2,9
Montanesterwachs, z.B. Licowax^{®} E von Clariant GmbH
Glasfasern, z.B. CS7928 von Lanxess Deutschland GmbH
Kaliumbromid, d₉₉ < 70 µm
Kupfer(I)-Iodid, d₉₉ < 70 µm
Talkum
Zinkpulver, d₅₀ < 5 µm, z. B. Zincdust^{®} superfine 620 von Conmet GmbH
Phosphit-Additiv, z.B. Doverphos^{®} S9228 von Dover Chemical Corporation.

## Patentansprüche

1. Thermoplastische Formmassen mit verbesserter Beständigkeit gegen Polymerkettenabbau enthaltend
(1) 10 bis 99,94 Gew.-% wenigstens eines thermoplastischen Polymers,
(2) 0,05 bis 20 Gew.-% Partikel enthaltend mindestens zwei elementaren Metallen, die in Kontakt miteinander sind, und
(3) 0,01 bis 70 Gew.-% wenigstens eines weiteren Zusatzstoffes mit der Maßgabe, dass die Summe aller Gewichtsprozente stets 100 ergibt und die Metalle in der Komponente (2) als separate Phasen vorliegen und keine Legierung bilden und in jeder Phase mindestens ein Metall zu mehr als 50 Gew.-% vorliegt.

2. Thermoplastische Formmassen gemäß Anspruch 1, **dadurch gekennzeichnet, dass** alle Metalle der Komponente (2) zu den Gruppen 8 bis 13 des Periodensystems gehören.

3. Thermoplastische Formmassen gemäß Anspruch 2, **dadurch gekennzeichnet, dass** alle Metalle enthaltend in der Komponente (2) aus der Gruppe Eisen, Cobalt, Nickel, Kupfer, Zink, Aluminium ausgewählt sind.

4. Thermoplastische Formmassen gemäß einem der Ansprüche 1 bis 3, **dadurch gekennzeichnet, dass** die Komponente (2) Eisen und mindestens ein weiteres Metall, welches unedeler ist als Eisen, enthält.

5. Thermoplastische Formmassen gemäß einem der Ansprüche 1 bis 4, **dadurch gekennzeichnet, dass** die Komponente (2) Eisen und mindestens ein weiteres Metall der Gruppe Zink und Aluminium, bevorzugt Zink enthält.

6. Thermoplastische Formmassen gemäß einem der Ansprüche 1 bis 5, **dadurch gekennzeichnet, dass** diese zusätzlich zu den Komponenten (1) bis (3) noch
(4) 5 bis 70 Gew.-% Füll- oder Verstärkungsstoffe, bevorzugt Glas- oder Carbonfasern, besonders bevorzugt Glasfasern enthalten wobei die Anteile der Komponenten (1), (2) und (3) so reduziert werden, dass sich die Anteile aller Komponenten zu 100 Gew.-% aufsummieren.

7. Thermoplastische Formmassen gemäß Anspruch 6, **dadurch gekennzeichnet, dass** diese zusätzlich zu den Komponenten (1), (2), (3) und (4) oder an Stelle der Komponente (4) noch
(5) 0,25 bis 10 Gew.-% eines oder mehrere Polyole mit mindestens zwei Hydroxyl-Gruppen enthalten wobei die Anteile der Komponenten (1), (2), (3) bzw. (1), (2), (3) und (4) so reduziert werden, dass sich die Anteile aller Komponenten zu 100 Gew.-% aufsummieren.

8. Verfahren zur Herstellung thermoplastischer Formmassen gemäß einem der Ansprüche 1 bis 7, **dadurch gekennzeichnet, dass** man die Komponenten (19 bis (3) und gegebenenfalls noch (4) und/oder (5) in entsprechenden Gewichtsanteilen mischt, bevorzugt bei 220 bis 360°C, besonders bevorzugt durch Vermengen, Vermischen, Kneten, Compoundieren, Extrudieren oder Verwalzen.

9. Verwendung von Partikeln enthaltend mindestens zwei elementare Metalle, die in Kontakt miteinander sind, zur Verbesserung der Beständigkeit thermoplastischer Formmassen gegen Polymerkettenabbau wobei die Metalle in den Partikeln als separate Phasen vorliegen und keine Legierung bilden und in jeder Phase mindestens ein Metall zu mehr als 50 Gew.-% vorliegt..

10. Verwendung gemäß Anspruch 9, **dadurch gekennzeichnet, dass** die Formmassen
(1) 10 bis 99,94 Gew.-% wenigstens eines thermoplastischen Polymers und
(3) 0,01 bis 70 Gew.-% wenigstens eines weiteren Zusatzstoffes enthalten und die Partikel (2) zu 0,05 bis 20 Gew.-% eingesetzt werden, mit der Maßgabe, dass die Summe aller Gewichtsprozente stets 100 ergibt.

11. Stoffgemische aus wenigstens einem Polyol und Partikeln enthaltend mindestens zwei elementare Metalle, wobei die Metalle in Kontakt miteinander sind, in den Partikeln als separate Phasen vorliegen, keine Legierung bilden und in jeder Phase mindestens ein Metall zu mehr als 50 Gew.-% vorliegt.

12. Stoffgemische gemäß Anspruch 11, **dadurch gekennzeichnet, dass** die Partikel aus einem Kern, der unedler ist als Eisen, und einer äußeren Schicht, die Eisen enthält, bestehen.

13. Stoffgemische gemäß Anspruch 12, **dadurch gekennzeichnet, dass** die Partikel aus einem Zink-Kern und einer äußeren Schicht, die Eisen enthält, bestehen.

14. Stoffgemische gemäß einem der Ansprüche 11 bis 13, **dadurch gekennzeichnet, dass** wenigstens ein Polyol mit mehr als zwei Hydroxylgruppen eingesetzt wird.

15. Verwendung der thermoplastischen Formmassen gemäß einem der Ansprüche 1 bis 7 oder der Stoffgemische gemäß einem der Ansprüche 11 bis 14 zur Herstellung von Bauteilen und Artikeln mit erhöhter Stabilität gegenüber einem Abbau der Polymerketten, bevorzugt in der Elektro-, Elektronik-, Telekommunikations-, Solar-, Informationstechnologie-, Computerindustrie, im Haushalt, Sport, in der Medizin oder der Unterhaltungsindustrie, besonders bevorzugt in Kraftfahrzeugen, ganz besonders bevorzugt für den Motorraum von Kraftfahrzeugen.
